# EUROPEAN PATENT APPLICATION

(11) **EP 4 575 215 A1**
(43) Date of publication of application: **25.06.2025**
(21) Application number: 23219213.8
(22) Date of filing: 21.12.2023
(51) Int. Cl.: F02M 21/02, B60K 15/03, F02D 19/02, F17C 7/00, H01M 8/04089

(54) **A FUEL STORAGE AND SUPPLY SYSTEM FOR A VEHICLE**

(71) Applicant: VOLVO TRUCK CORPORATION, 405 08 Göteborg (SE)
(72) Inventor: BABAYEV, Rafig, 414 78 GÖTEBORG (SE); BHAVANI SHANKAR, Vijai Shankar, 414 78 GÖTEBORG (SE)
(74) Representative: Kransell & Wennborg KB

(57) **Abstract**

A fuel storage and supply system (10) for a vehicle (1), the fuel storage and supply system comprising: a number of fuel storage tanks (12) for storing a pressurized fuel (13); a fuel conduit arrangement (20) configured to be in fluid communication with the number of tanks; an expander (15) disposed in the fuel conduit arrangement and further arranged downstream the number of tanks, the expander being configured to convert at least a portion of the energy from the pressurized fuel into mechanical work; a fuel supply control system (80), the fuel supply control system comprising a fuel control valve arrangement (30) disposed in the fuel conduit arrangement, the fuel control valve arrangement having a first fuel control valve (31) disposed in the fuel conduit arrangement and in-between the number of tanks and the expander, the first fuel control valve being configured to regulate a flow of the pressurized fuel, and a second fuel control valve (32) disposed in an expander by-pass channel (23), the expander by-pass channel extending from an inlet position (50) upstream the first fuel control valve to an outlet position (52) downstream the expander, the second fuel control valve being configured to regulate a flow of the pressurized fuel; wherein the fuel supply control system (80) further comprises a controller (85) having processing circuitry (82) configured to control flow of fuel through the expander by controlling any one of the first and second fuel control valves in response to a comparison between a fuel supply characteristics level associated with the number of fuel storage tanks and a demanded fuel delivery characteristics level associated with a fuel-consuming power source(16).

## Description

### TECHNICAL FIELD

The disclosure relates generally to fuel storage and supply systems for vehicles. In particular aspects, the disclosure relates to a fuel storage and supply system for an internal combustion engine of a vehicle. In other aspects, the disclosure relates to a fuel storage and supply system for a fuel cell system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The utilization of alternative fuels, such as hydrogen gas or natural gas, including both LNG and CNG, as a clean and sustainable fuel source for internal combustion engines is one of many examples considered in the heavy-duty vehicle industry. By way of example, natural gas is recognized for its reduced carbon emissions, improved air quality, and cost-efficiency compared to conventional gasoline or diesel fuels. Moreover, hydrogen gas may not only be used as a fuel for an ICE system but can also be utilized as a fuel component for vehicles having a fuel cell system.

However, using such alternative fuels in a vehicle may present several new challenges on the fuel supply system in comparison with other more traditional fuels. One of these challenges relates to the storage of fuel (e.g. hydrogen gas) in the vehicle and the supply of the fuel to the ICE and/or the fuel cell system. In this context, the ICE and the fuel cell system are two examples of fuel-consuming power sources. By way of example, delivering hydrogen to such fuel-consuming power sources at the correct pressure involves addressing specific challenges related to the compression, storage, and transportation of hydrogen.

Conventional hydrogen fuel storage systems for heavy-duty vehicles may generally include on-board high-pressure tanks, typically pressurized at about 700 bar. However, fuel injection processes in both fuel cell system and ICE system, e.g. spark-ignited ICE system, may occur at substantially lower pressures ranging from 6 to 20 bar. In other words, the fuel, such as hydrogen, needs to be delivered to the fuel-consuming power source at a suitable pressure level. While the fuel supply system may include a pressure regulation system to ensure the gas is supplied at the right pressure level, there is still a need for further development in order to provide an efficient delivery of compressed hydrogen to a fuel-consuming power source, such as an ICE or a fuel cell system of a heavy-duty vehicle.

### SUMMARY

According to a first aspect of the disclosure, there is provided a fuel storage and supply system for a vehicle, the fuel storage and supply system comprising: a number of fuel storage tanks for storing a pressurized fuel; a fuel conduit arrangement configured to be in fluid communication with the number of tanks; an expander disposed in the fuel conduit arrangement and further arranged downstream the number of tanks, the expander being configured to convert at least a portion of the energy from the pressurized fuel into mechanical work; a fuel supply control system, the fuel supply control system comprising a fuel control valve arrangement disposed in the fuel conduit arrangement, the fuel control valve arrangement having a first fuel control valve disposed in the fuel conduit arrangement and in-between the number of tanks and the expander, the first fuel control valve being configured to regulate a flow of the pressurized fuel, and a second fuel control valve disposed in an expander by-pass channel, the expander by-pass channel extending from an inlet position upstream the first fuel control valve to an outlet position downstream the expander, the second fuel control valve being configured to regulate a flow of the pressurized fuel; wherein the fuel supply control system further comprises a controller having processing circuitry configured to control flow of fuel through the expander by controlling any one of the first and second fuel control valves in response to a comparison between a fuel supply characteristics level associated with the number of fuel storage tanks and a demanded fuel delivery characteristics level associated with a fuel-consuming power source.

The first aspect of the disclosure may seek to enhance energy efficiency within a fuel storage and supply system for a vehicle including at least one fuel-consuming power source in the form of an internal combustion engine and/or a fuel cell system. A technical benefit may include providing an improved extraction of compression energy from the pressurized fuel, such as pressurized hydrogen fuel, in the fuel tank(s) of the fuel storage and supply system. In addition, the proposed fuel storage and supply system may provide for improving the control of the pressure levels of the pressurized fuel during varying operating conditions of the fuel-consuming power source and the vehicle. More specifically, the proposed fuel storage and supply system may at least partly mitigate the problems with undesired delay to reach demanded fuel injection pressures for the internal combustion engine and/or the fuel cell system.

In some examples, where the fuel storage and supply system may be an integral part of a powertrain system, the disclosure may contribute to an improved fuel efficiency of the powertrain system.

The fuel storage and supply system may be particularly useful for a powertrain system including an internal combustion engine and any one of a low-pressure direct injection fuel system, a port fuel injection system, intake manifold fuel injection, and/or a combination thereof.

The fuel storage and supply system may also be useful for internal combustion engines in the form of spark-ignited internal combustion engines, such as spark-ignited high-pressure direct injection internal combustion engines.

Optionally in some examples, including in at least one preferred example, the demanded fuel delivery characteristics level associated with a fuel-consuming power source may be any one of a demanded fuel injection pressure for the fuel-consuming power source and a demanded fuel flow rate for the fuel-consuming power source.

Optionally in some examples, including in at least one preferred example, the fuel supply control system may be configured to control the fuel storage and supply system in any one of a first operational mode, in which delivery of pressurized fuel is performed through the expander, a second operational mode, in which delivery of pressurized fuel is performed via the expander by-pass channel, and dual operational mode, in which delivery of pressurized fuel is performed partly through the expander and partly via the expander by-pass channel. A technical benefit may include providing a more precise and sophisticated control of the flow of fuel through the expander.

Optionally in some examples, including in at least one preferred example, the fuel supply control system further may comprise a third fuel control valve disposed in the fuel conduit arrangement, the third fuel control valve being disposed downstream the outlet position, the third fuel control valve being configured to regulate a flow of the pressurized fuel. A technical benefit may include providing a more precise regulation of the flow of fuel from the expander to the fuel-consuming power source, such as a more precis regulation of fuel pressure when the valve is pressure regulator and/or a more precis regulation of the flow rate of the fuel when the valve is a flow rate control valve.

Optionally in some examples, including in at least one preferred example, the fuel supply control system may be configured to control the fuel storage and supply system in the first operational mode by controlling the first fuel control valve to an open state, the second fuel control valve to a closed state, while the third fuel control valve is controllable to regulate the flow of the pressurized fuel. A technical benefit may include providing a more dynamic and precis regulation of the fuel from the fuel tanks to the fuel-consuming power source.

Optionally in some examples, including in at least one preferred example, the fuel supply control system is configured to control the fuel storage and supply system in the second operational mode by controlling the first fuel control valve to a closed state, the second fuel control valve to an open state, while the third fuel control valve is controllable to regulate the flow of the pressurized fuel. A technical benefit may include providing an even more dynamic and precis regulation of the fuel from the fuel tanks to the fuel-consuming power source.

Optionally in some examples, including in at least one preferred example, the fuel may be any one of hydrogen gas, methane and natural gas. A technical benefit may include utilizing a fuel having a high energy density, which for hydrogen gas (H2) is approximately 120 MJ/kg and for natural gas (NG) approximately 55 MJ/kg.

Optionally in some examples, including in at least one preferred example, the fuel-consuming power source may be any one an internal combustion engine and a fuel cell system. The internal combustion engine may be a spark-ignited internal combustion engine. In addition, the internal combustion engine may be a low-pressure direct injection internal combustion engine system or a high-pressure direct injection internal combustion engine.

The internal combustion engine may be a hydrogen internal combustion engine, such as a hydrogen high pressure direct injection internal combustion engine, wherein the fuel storage and supply system is arranged to supply pressurized hydrogen gas to the internal combustion engine.

Optionally in some examples, including in at least one preferred example, the expander may be configured to be connected to any one of a crankshaft of an internal combustion engine, so as to provide additional power, and/or a generator for charging a battery system.

Optionally in some examples, including in at least one preferred example, the fuel storage and supply system may further comprise a heat exchanger arranged in-between the expander and the third fuel control valve. A technical benefit may include providing an efficient configuration for further controlling the temperature of the pressurized fuel. Another technical benefit with using a heat exchanger is that the arrangement of the heat exchanger allows for using e.g. hydrogen gas tanks as cold heat reservoirs for a cooling system of the powertrain.

Optionally in some examples, including in at least one preferred example, the number of fuel tanks may be grouped into a first sub-group of fuel tanks and a second sub-group of fuel tanks, wherein the first sub-group of fuel tanks is configured to be used in response to a higher demanded fuel injection pressure, while the second sub-group of fuel tanks is configured to be used in response to a lower demanded fuel injection pressure. A technical benefit may include providing a fuel tank arrangement enabling an even more efficient fuel management in that the sub-groups of tanks allows for reducing the needed amount of fuel to compress to a peak injection pressure. More specifically, the second sub-group of fuel tanks, typically containing fuel of lower pressure, can be used to supply fuel to the fuel-consuming power source, such as the ICE, when the injection pressure demand is lower (e.g. part/low load operation, idling, etc.).

Optionally in some examples, including in at least one preferred example, the expander may be disposed downstream the first sub-group of fuel tanks and the second sub-group of fuel tanks.

Alternatively, or in addition, the expander may be disposed in-between the first sub-group of tanks and the second sub-group of tanks.

Optionally in some examples, including in at least one preferred example, the fuel storage and supply system may comprise a fourth flow control valve disposed upstream the inlet position. A technical benefit may include providing an even more efficient control of the flow of fuel from the fuel tank(s) to the fuel-consuming power source.

Optionally in some examples, including in at least one preferred example, the fuel tanks may be configured to store pressurized gaseous fuel at about 700 to 800 bar. For example, the fuel tanks are arranged to maintain the pressurized gaseous fuel at a maximum pressure of 800 bar. For example, the fuel tanks are arranged to store the pressurized gaseous fuel between 700 bar and 800 bar.

Optionally in some examples, including in at least one preferred example, the fuel tanks may be configured to store pressurized gaseous fuel at about 300 to 350 bar.

Optionally in some examples, including in at least one preferred example, the fuel stored in the fuel tanks is mainly gaseous fuel. For example, at least 70 %, or at least 80 %, or at least 90 %, or at least 95 % (based on volume) of the fuel in the fuel tanks is gaseous. Thus, the fuel tanks are arranged to store the fuel as pressurized gaseous fuel such that at least 70 %, or at least 80 %, or at least 90 %, or at least 95 % (based on volume) of the fuel in the fuel tanks is gaseous.

According to a second aspect of the disclosure, there is provided a vehicle comprising a fuel storage and supply system according of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an internal combustion engine in the form of a hydrogen combustion engine or a hydrogen high pressure direct injection engine. The internal combustion engine is configured to receive the pressurized fuel from the fuel conduit arrangement for combustion inside the engine. For example, the fuel storage and supply system may comprise a fuel rail upstream of a fuel injector of the internal combustion engine, wherein the fuel rail is arranged to supply pressurized gaseous fuel to the fuel injector(s) of the internal combustion engine.

Optionally in some examples, including in at least one preferred example, the vehicle further comprises a fuel cell system.

According to a third aspect of the disclosure, there is provided a method for controlling a fuel storage and supply system. The fuel storage and supply system comprises a number of fuel storage tanks for storing a pressurized fuel; a fuel conduit arrangement configured to be in fluid communication with the number of tanks; an expander disposed in the fuel conduit arrangement and further arranged downstream the number of tanks, the expander being configured to convert at least a portion of the energy from the pressurized fuel into mechanical work; a fuel supply control system, the fuel supply control system comprising a fuel control valve arrangement disposed in the fuel conduit arrangement, the fuel control valve arrangement having a first fuel control valve disposed in the fuel conduit arrangement and in-between the number of tanks and the expander, the first fuel control valve being configured to regulate a flow of the pressurized fuel, a second fuel control valve disposed in an expander by-pass channel, the expander by-pass channel extending from an inlet position upstream the first fuel control valve to an outlet position downstream the expander, the second fuel control valve being configured to regulate a flow of the pressurized fuel. The method comprises controlling flow of fuel through the expander by controlling any one of the first and second fuel control valves in response to a comparison between a fuel supply characteristics level associated with the number of fuel storage tanks and a demanded fuel delivery characteristics level associated with a fuel-consuming power source.

The third aspect of the disclosure may seek to solve the same problem as described for the first to second aspects of the disclosure. Thus, effects and features of the third aspect of the disclosure are largely analogous to those described above in connection with the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

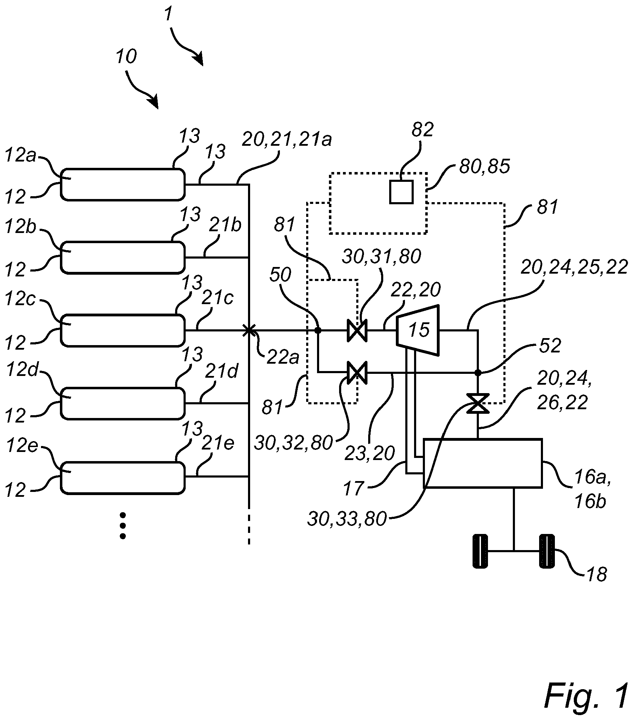

**FIG. 1** schematically illustrates an exemplary vehicle comprising a fuel-consuming power source, such as an internal combustion engine or a fuel cell system, and a fuel storage and supply system arranged to supply fuel to the fuel-consuming power source according to one example.

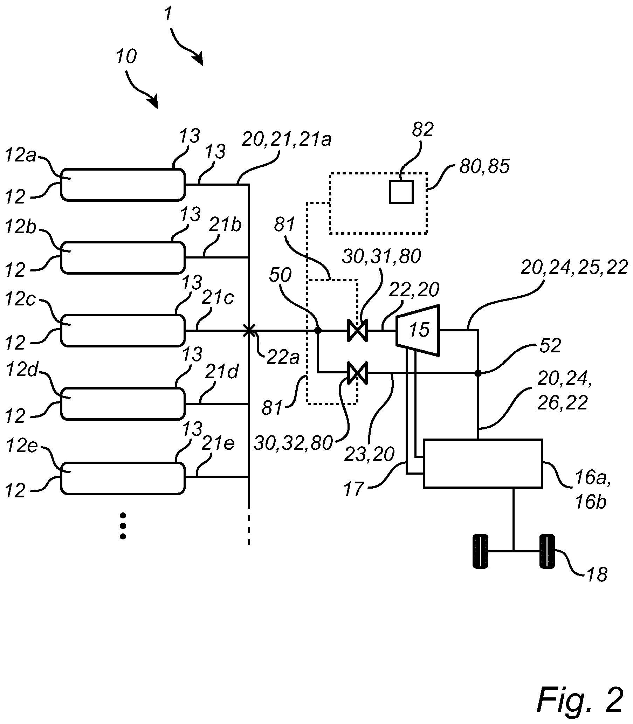

**FIG. 2** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

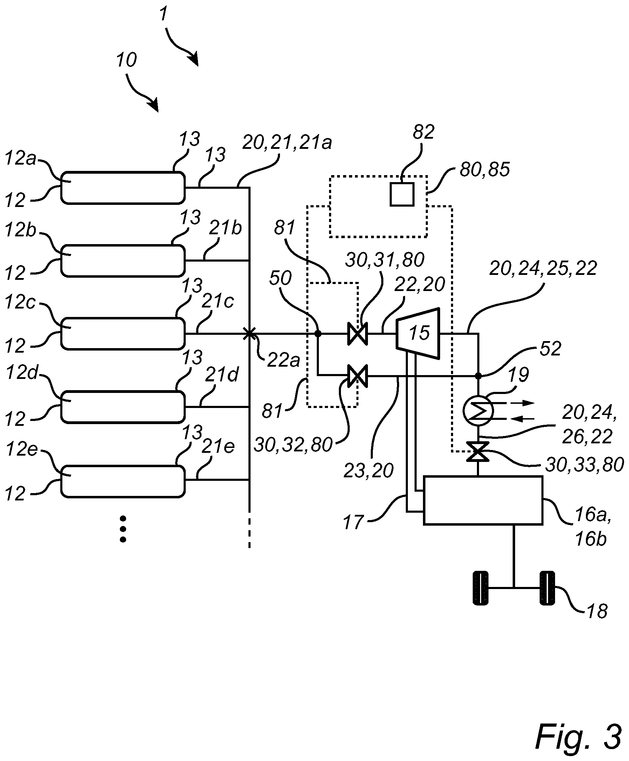

**FIG. 3** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

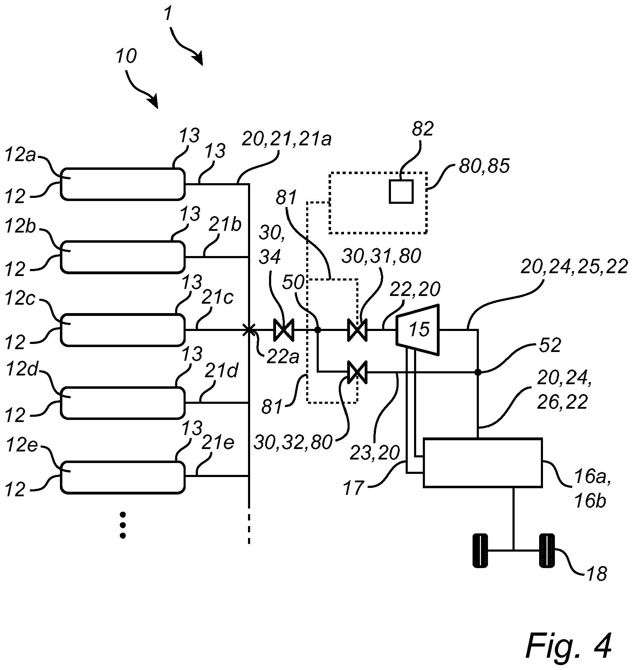

**FIG. 4** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

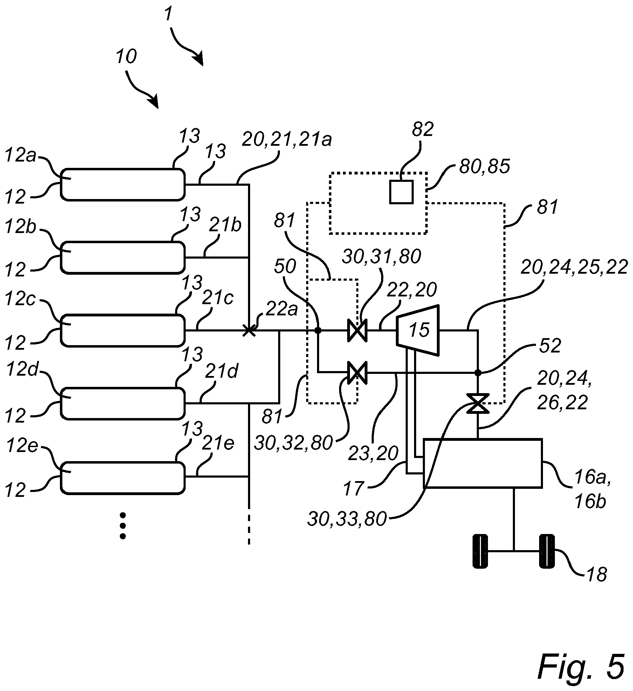

**FIG. 5** schematically illustrates another exemplary fuel storage and supply system, which is fluidly connected to a fuel-consuming power source, such as an internal combustion engine or a fuel cell system, wherein the fuel storage and supply system is arranged to supply fuel to the fuel-consuming power source according to one example.

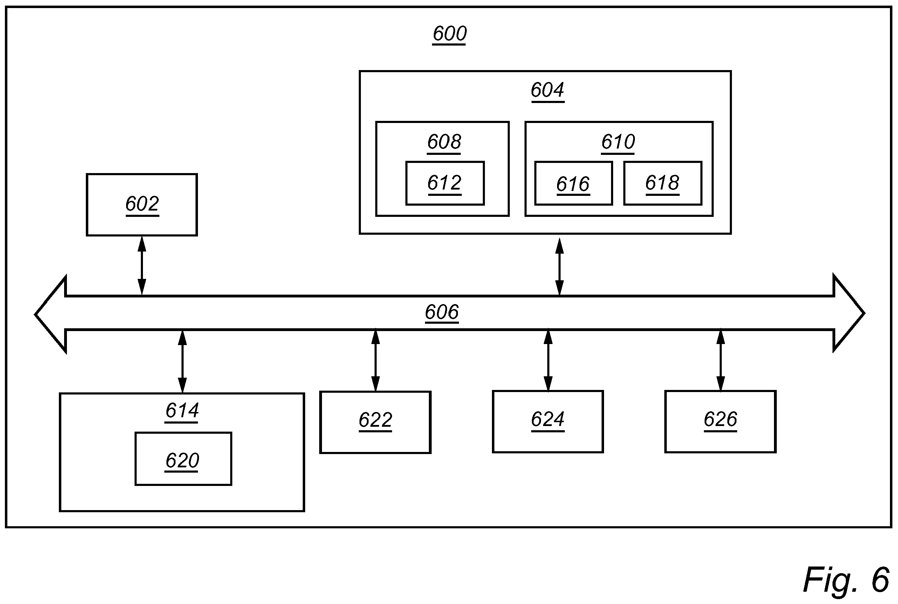

**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An internal combustion engine (ICE) operating on hydrogen gas, Liquefied Natural Gas (LNG) or Compressed Natural Gas (CNG) are some examples of a power source that may be an attractive alternative to traditional gasoline or diesel-powered engines. Such ICE system may produce fewer harmful emissions compared to gasoline and diesel.

Another potential attractive alternative to traditional gasoline or diesel-powered engines may be a power source in the form of a fuel cell system.

These types of power sources are in the context of the disclosure denoted as fuel-consuming power sources.

However, despite the progress in the industry, there is still a challenge in delivering fuel, such as hydrogen gas, to these types of fuel-consuming power sources at the correct pressure. Purely by way of example, conventional hydrogen fuel storage systems for heavy-duty vehicles may generally include on-board high-pressure tanks, typically pressurized at about 700 bar. However, fuel injection processes in both fuel cell system and ICE system, e.g. spark-ignited ICE system, may occur at substantially lower pressures ranging from 6 to 20 bar. High-pressure direct-injection (HPDI) ICEs are also generally configured to throttling the hydrogen gas pressure down from about 700 bar to about 300 bar. In other words, the fuel, such as hydrogen, needs to be delivered to the fuel-consuming power source at a suitable pressure level. In order to provide an appropriate pressure reduction, many of the conventional methods employ throttle valves to reduce hydrogen pressure, bleeding off excess pressure by inducing turbulence and converting it into heat. Despite the effectiveness with such throttle valves, these methods have inherent drawbacks, including energy inefficiencies due to pressure energy dissipation as heat and challenges in achieving precise control over the pressure reduction process. By way of example, it has been observed that most of the internal energy (excluding chemical) contained in the compressed hydrogen gas may be lost when undergoing the throttling process.

For these and other reasons, there is still a need for improving fuel storage and supply systems for fuel-consuming power sources operating on alternative fuels, such as hydrogen gas.

To remedy this, the present disclosure provides systems and methods using an expander arranged in-between the fuel tanks and the fuel-consuming power source.

The disclosure may thus seek to enhance energy efficiency within a fuel storage and supply system for a vehicle including at least one fuel-consuming power source in the form of an internal combustion engine and/or a fuel cell system. A technical benefit may include providing an improved extraction of compression energy from the pressurized fuel, such as pressurized hydrogen fuel, in the fuel tank(s) of the fuel storage and supply system. In addition, the proposed fuel storage and supply system may provide for improving the control of the pressure levels of the pressurized fuel during varying operating conditions of the fuel-consuming power source and the vehicle. More specifically, the proposed fuel storage and supply system may at least partly mitigate the problems with undesired delay to reach demanded fuel injection pressures for the internal combustion engine and/or the fuel cell system.

The fuel storage and supply system may be particularly useful for an internal combustion engine including any one of a low-pressure direct injection fuel system, a port fuel injection system, an intake manifold fuel injection, and/or a combination thereof. In such example, the fuel storage and supply system is an integral part of the overall fuel system. Alternatively, or in addition, the fuel storage and supply system is in fluid communication with the low-pressure direct injection fuel system.

The fuel storage and supply system may also be useful for internal combustion engines in the form of spark-ignited internal combustion engines, such as spark-ignited high pressure direct injection internal combustion engines.

FIG. 1 schematically illustrates a vehicle 1 in the form of an exemplary heavy-duty truck. It should be noted that the vehicle may be any type of vehicle suitable for transporting goods and/or people, such as bulk material from one location to another. For example, the vehicle may be an excavator, loader, articulated hauler, dump truck, truck or any other suitable vehicle known in the art. In some embodiments, the vehicle may be driven by an operator. In other embodiments, the vehicle may be an autonomous vehicle that is controlled by a vehicle motion management (VMM) unit configured to individually control vehicle units and/or vehicle axles and/or wheels of the vehicle. For ease of reference, the following description refers to vehicles in the form of heavy-duty vehicles, such as trucks.

The vehicle 1 illustrated in FIG. 1 comprises a fuel-consuming power source 16. As described herein, the fuel-consuming power source 16 is either an internal combustion engine (ICE) 16a or a fuel cell system 16b.

In an example where the fuel-consuming power source 16 is an ICE 16a, the ICE 16a is configured to provide power for propelling the vehicle 1. The ICE 16a is here a hydrogen ICE. In a hydrogen ICE, the ICE 16a is configured to combust a pressurized gaseous fuel in the form of hydrogen. Such combustion process of hydrogen produces water as by-product in the exhausts. The ICE 16a may e.g. be a pure hydrogen (H2) ICE, such as a hydrogen low-pressure direct injection ICE, a hydrogen high-pressure direct injection ICE, a port fuel injection ICE, and/or an intake manifold fuel injection ICE. In other examples, the ICE 16a is hydrogen-based ICE operating on a mix of hydrogen fuel and another fuel, such as diesel fuel. In other examples, the ICE 16a is natural gas (NG) ICE. In other examples, the ICE 16a is a methane ICE.

As is commonly known in the art, an ICE 16a typically comprises one or more cylinders having corresponding combustion chamber and reciprocating pistons (not illustrated). Such ICE 16a also comprises a fuel injection system having one or more fuel injectors for injecting fuel into the one or more cylinder. Alternatively, or in addition, the fuel injection system is configured to inject fuel into the inlet port(s) of the cylinder(s) (i.e. port fuel injection system). In order to deliver fuel to the fuel injector(s), the ICE 16a also comprises a so called fuel rail arrangement. The fuel rail arrangement is arranged and configured to receive fuel from one or more fuel tanks 12, 12a to 12n. The ICE 16a, i.e. the fuel-consuming power source 16 is configured to be connected to one or more ground engaging members 18, such as one or more wheels of the vehicle 1, as illustrated in FIG. 1.

In this context, a fuel rail arrangement may generally refer to a component in the fuel injection system that delivers pressurized fuel to the fuel injectors. Its primary purpose is to distribute fuel evenly to the injectors, which then spray the fuel into the combustion chambers. The fuel rail is typically mounted on the ICE 16a, and it connects to the fuel injectors through short fuel lines. The fuel rail is arranged and configured to maintain a certain pressure to ensure proper fuel atomization and combustion in the ICE 16a. The pressure can further be regulated by a fuel pressure regulator (not illustrated).

As mentioned above, the fuel-consuming power source 16 may likewise be a fuel cell system 16b. The fuel cell system 16b is of a conventional type and generally comprises one or more fuel cell stacks, each one having a number of fuel cells. By way of example, a number of fuel cells may form the so-called fuel cell stack. The fuel cells may likewise be arranged in multiple fuel cell stacks, each fuel cell stack comprising multiple fuel cells arranged in a stack configuration. Further, each one of the fuel cells making up the fuel cell stack, and thus the fuel cell system 16b, generally comprises an anode side receiving hydrogen as a fuel component and a cathode side receiving compressed air as another fuel component. While there are several different types of fuel cells, distinguished mainly by the type of electrolyte used, a so-called Proton Exchange Membrane (PEM) fuel cell is particularly suitable for use in heavy-duty vehicles, such as the vehicle 1 in FIG. 1. Hence, the fuel cell system is here a PEM fuel cell system. For the purposes of the proposed system and method, as described further herein, the fuel cell system is schematically illustrated and only depicts the anode side, i.e. the cathode side is omitted for simplifying the illustration. Other components such as balance of plant components could also be included in the fuel cell system as are commonly used in the field of fuel cell system.

The fuel cell system 16b may generally be an integral part of an electric propulsion system 12 configured to provide traction power to the vehicle. Hence, in the example when the fuel-consuming power source is fuel cell system, the vehicle is an electric truck, e.g. a fully electrical vehicle. The electrical truck comprises the electric propulsion system having an electrical energy storage system and an electrical machine. The electric machine is a traction motor for providing traction power to the vehicle, i.e. for propelling one or more ground engaging members 18 of the vehicle 1, such as a pair of wheels of the vehicle 1. The energy storage system is here the fuel cell system. Optionally the electric propulsion system may also include a battery system including one or more high voltage batteries. The fuel cell system is connected to the electrical machine to provide power to the electrical machine, thereby the electrical machine can provide traction power to one or more ground engaging members 18, e.g. one or more wheels. The electric machine may generally include a conventional electric motor.

In other examples, the vehicle 1 may be a hybrid vehicle, comprising a set of fuel-consuming power sources 16, such as the fuel cell system 16b and the ICE 16a.

The fuel-consuming power source 16 is configured to consume gaseous fuel (e.g. hydrogen) supplied to the fuel-consuming power source 16 by a fuel storage and supply system 10. As such, the power comes from burning fuel in the ICE 16a or from electrochemical reactions in the fuel cell system 16b. To this end, a fuel-consuming power source refers to a device or system that uses a fuel as an input to generate power or electricity. For ease of reference, the following description will refer to the ICE and/or the fuel cell system as the fuel-consuming power source 16, and the examples below may likewise be applicable to both the ICE and the fuel cell system unless explicitly stated herein.

As illustrated in FIG. 1, the vehicle 1 further comprises a controller 85 configured to control at least some of the operations of the fuel storage and supply system 10, as described below, such as e.g. the control of the fuel from one or more fuel tanks to the fuel-consuming power source 16.

Turning again to FIG. 1, which illustrates an example of the fuel storage and supply system 10. As depicted in FIG. 1, the fuel storage and supply system 10 comprises a number of fuel storage tanks 12 for storing a pressurized fuel 13. Each one of the fuel storage tanks 12, 12a to 12n, is configured and arranged to store pressurized fuel 13. Each one of the fuel storage tanks 12, 12a to 12n, is also configured and arranged to supply pressurized fuel 13 to the fuel-consuming power source 16 via a fuel conduit arrangement 20, as illustrated in FIG. 1.

The fuel 13 is a pressurized fluid medium, in particular a gaseous medium, such as hydrogen gas, although a liquid fluid medium may also be considered. In examples where the fuel is a liquid fuel, it could potentially be a cryogenic liquified gas. It should be noted that the fuel may still need to be expanded as a gas in the expander of the fuel storage and supply system 10, but it could potentially be stored in the liquid form, before being evaporated somewhere upstream of the expander 15. The evaporation of a fuel in liquid form to gaseous form belongs to common general knowledge, and is thus not further described herein.

In the following examples, as e.g. illustrated in FIG. 1, the fuel 13 is hydrogen gas. In other examples (not illustrated), the fuel 13 is a natural gas. The fuel 13 may also be methane, such as pure methane, e.g. bio methane or synthetic methane. The hydrogen gas, i.e. the fuel 13, is thus an integral part of the fuel storage and supply system 10.

Accordingly, as illustrated in FIG. 1, the fuel storage and supply system 10 further comprises the fuel conduit arrangement 20. The fuel conduit arrangement 20 is configured to be in fluid communication with the number of tanks 12, 12a to 12n. The fuel conduit arrangement 20 is here also configured to contain and transport fuel 13 from the fuel storage tanks 12 to the fuel-consuming power source 16.

More specifically, as illustrated in FIG. 1, the fuel conduit arrangement 20 is configured to be in fluid communication with each one of the fuel tanks of the number of tanks 12, 12a to 12n. Hence, by way of example, the fuel conduit arrangement 20 comprises a first branch of fuel conduits 21, 21a to 21n.

The first branch of fuel conduits 21, 21a to 21n comprises a plurality of fuel conduits, e.g. five fuel conduits. The number of fuel conduits generally varies in view of the number of fuel tanks 12. As such, each one of the fuel tanks is configured to be fluidly connected to the fuel conduit arrangement 20 by a corresponding fuel conduit 21. Hence, as illustrated in FIG. 1, a first conduit 21a of the first branch of conduits 21 is fluidly connected to a first fuel tank 12a of the fuel tanks 12, a second conduit 21b of the first branch of conduits 21 is fluidly connected to a second fuel tank 12b of the fuel tanks 12, a third conduit 21c of the first branch of conduits 21 is fluidly connected to a third fuel tank 12c of the fuel tanks 12, a fourth conduit 21d of the first branch of conduits 21 is fluidly connected to a fourth fuel tank 12d of the fuel tanks 12, and a fifth conduit 21e of the first branch of conduits 21 is fluidly connected to a fifth fuel tank 12e of the fuel tanks 12. As may be gleaned from FIG. 1, the fuel tanks 12a to 12e are thus arranged in a parallel configuration. Accordingly, it should also be noted that the fuel tanks 12, 12a to 12n, are here arranged in a parallel fuel tank configuration. In this context, a parallel configuration is different to a series configuration of fuel tanks.

Each one of the fuel tanks 12, 12a to 12n may be provided in the form of a large container that stores the vehicle's fuel. Its primary function is to store fuel securely and provide a constant supply to the fuel-consuming power source 16. Each one of the fuel tanks may be located at the rear of the vehicle, underneath the chassis or body, or at any other location on or in the vehicle. Each one of the fuel tanks 12, 12a to 12n may often comprise additional components such as fuel level sensors, vents, and filler necks for refueling. These types of components are commonly known in the art, and thus not further described herein.

Further, as depicted in FIG. 1, each one of the fuel tanks 12, 12a to 12n, is in fluid communication with a main fluid conduit 22 of the fuel conduit arrangement 20. The first branch of fuel conduits 21, 21a to 21n may be arranged to converge to a common junction point 22a at the main fluid conduit 22, as indicated in FIG. 1. Accordingly, the first branch of fuel conduits 21, 21a to 21n are fluidly connected to the main fluid conduit 22.

Also, the fuel storage and supply system 10 comprises an expander 15. The expander 15 disposed in the fuel conduit arrangement 20. The expander 15 is further arranged downstream the number of tanks 12, 12a to 12n. As illustrated in FIG. 1, the expander 15 is here disposed in the main fluid conduit 22. The main fluid conduit 22 is arranged downstream the fuel tanks 12, 12a to 12n, and also arranged downstream the first branch of fuel conduits 21, 21a to 21n. As illustrated in FIG. 1, the main fluid conduit further comprises an expander exhaust fuel conduit 24. The exhaust fuel conduit 24 extends between the expander 15 and the fuel-consuming power source 16. Hence, the exhaust fuel conduit 24 may be considered as an inlet conduit to the fuel-consuming power source 16.

The expander 15 is configured to convert at least a portion of the energy from the pressurized fuel into mechanical work. More specifically, the expander 15 is configured to extract compression energy from the pressurized fuel. In this manner, the expander 15 is arranged and configured to allow for expanding e.g. the compressed hydrogen gas inside the fuel tanks 12, thus recovering part of the energy that was required for compressing the hydrogen gas during the filling process of the fuel tanks and subsequently making this energy usable by the vehicle, as further described hereinafter.

The expander 15 can be configured for converting energy to mechanical work or converting energy to electric energy. This process is typically achieved by allowing the fluid (fuel 13) to expand and do work on a piston, rotor, or other mechanical components. The expander 15 can be provided in several different configurations. By way of example, the expander 15 includes an expansion chamber or a cylinder in which the working fluid (fuel 13) is introduced. Inside the expansion chamber, the working fluid (fuel 13) undergoes an expansion process. The process may typically involve the working fluid (fuel 13) expanding and undergoing a change in pressure and temperature. As the working fluid (fuel 13) expands, it pushes against the piston or the rotor of the expander 15, causing mechanical movement.

The mechanical movement of the piston or rotor is harnessed to perform useful mechanical work, such as rotating a shaft, driving a generator, or powering a mechanical load. The mechanical work can also be used to produce electricity, drive auxiliary systems, or perform other operations in the vehicle.

By way of example, the expander 15 may either be connected to a crankshaft 17 of the ICE 16a and arranged to provide additional power to the ICE system, or, in the case of a hybrid-electric vehicles, or a fuel cell vehicle, be arranged and configured to drive a generator, which can charge one or more batteries of the vehicle. In addition, the expander 15 may also be arranged and configured to charge the batteries for any auxiliary systems of the vehicle.

In FIG. 1, the expander 15 is configured to be connected to the fuel-consuming power source 16. In the example where the fuel-consuming power source 16 is the ICE 16a, the expander 15 is connected to the ICE 16a via a shaft, such as the crankshaft 17. In this manner, the expander 15 is configured to support the ICE 16a by converting at least a portion of the energy from the pressurized fuel into mechanical work. As such, the expander 15 is directly connected to the crankshaft 17 of the ICE 16a, such that the additional mechanical energy from the expander can help drive the crankshaft 17 and provide extra power to the ICE 16a. The expander 15 may also be connected to the ICE by means of a shaft and a transmission, e.g. in cases where the rpms of the expander and the ICE are substantially different to each other.

In the example where the fuel-consuming power source 16 is the fuel cell system 16b, the expander 15 may be connected to the fuel cell system 16b via a generator and a battery, such as the battery system, and an electrical connection. The generator converts the mechanical energy into electrical energy through electromagnetic induction, which can be used to charge the battery system. In this manner, the expander 15 is configured to support the fuel cell system 16b by converting at least a portion of the energy from the pressurized fuel into electricity. More specifically, the expander 15 converts pressure to mechanical work, which is used to drive the generator. The generator is thus configured to produce electrical energy that can charge the battery system. The battery system is then arranged and configured to support the auxiliary systems and/or the electric machine(s) of the vehicle. As such, the expander 15 is generally configured to be connected to a generator, which is arranged and configured to produce electricity. The generator is then arranged and configured to charge the batteries of the battery system, and/or to power the electric motors, or any other on-board devices.

It should also be noted that above arrangement of the expander to a generator and battery system may be likewise implemented in an example where the fuel-consuming power source is the ICE 16a. Accordingly, the expander 15 may not only be used to extract mechanical energy from the high-pressure gas as it expands, but also be connected to a generator. That is, the mechanical energy extracted by the expander is used to drive a generator.

In a hybrid example comprising both the ICE 16a and a high-voltage battery system, the expander 15 may be connected to the crankshaft 17 to produce additional mechanical power, and/or connected to a generator to supply energy to the generator for charging the battery system.

In another example where the vehicle comprises the ICE 16a and no electric machine, the expander 15 is typically connected to a generator to produce electricity for use in auxiliary system, such as on-board electronics, AC, etc.

After performing work in the expander 15, the expanded fuel 13 is directed from the expander 15 to the fuel-consuming power source 16, and used as a fuel by the fuel-consuming power source 16, e.g. for combustion in the example of the ICE 16a, or for producing electricity in the example of the fuel cell system 16b.

In FIG. 1, the expander 15 is a reciprocating piston expander. However, the expander 15 may likewise be a turbine expander.

Another advantage with arranging the expander 13 in the fuel conduit arrangement 22 is that the fuel storage and supply system 10 may not need to be provided with a buffer fuel tank downstream the fuel-consuming power source 16, as compared to hitherto known prior art system.

Furthermore, as illustrated in FIG. 1, the fuel storage and supply system 10 comprises a fuel supply control system 80. The fuel supply control system 80 can be provided in several different manners, as will be described herein. In FIG. 1, the fuel supply control system 80 comprises a fuel control valve arrangement 30. The fuel control valve arrangement 30 here comprises a set of fuel control valves 31, 32.

More specifically, the fuel control valve arrangement 30 is disposed in the fuel conduit arrangement 20. The fuel control valve arrangement 30 comprises a first fuel control valve 31. The first fuel control valve 31 is disposed in the fuel conduit arrangement 20 and in-between the number of tanks 12 and the expander 15. The first control valve 31 is configured to regulate a flow of the pressurized fuel 13.

The first fuel control valve can be provided in several different manners. In one example, the first fuel control valve 31 is a pressure regulator valve. In another example, the first fuel control valve 31 is flow block valve. In another example, the first fuel control valve 31 is a flow control valve. Accordingly, the first fuel control valve 31 is provided in the form or a pressure regulator valve, a flow block valve or a flow control valve.

As used herein, a pressure regulator valve is configured to maintain a specific pressure level in a fluid conduit, such as the main fluid conduit. The pressure regulator valve is used to control and limit the pressure of the fuel. The pressure regulator valve controls pressure by adjusting the resistance to the flow, thus influencing the pressure downstream the pressure regulator valve.

As used herein, a flow block valve is configured to regulate flow of fuel through blocking or stopping the flow of fuel through a fluid conduit. Examples of flow block valves can be shut-off valves or isolation valves used to control the passage of fluid, preventing or allowing flow as needed.

As used herein, a flow control valve is configured to regulate a rate or speed of fuel flow through the flow control valve. As such, a flow control valve is designed to control the volume of fluid passing through it. The flow control valve typically controls flow by adjusting the size of the valve opening or by throttling the flow.

The choice between the valves may generally depend on the specific requirements of the application and the desired control parameters for the fuel being used.

It should thus be appreciated that the term "regulating a flow of pressurized fuel" may refer to a regulation of a fuel flow rate, a regulation of a fuel pressure, and/or a combination of a regulation of fuel flow rate and fuel pressure. The term can thus be interpreted to cover different scenarios, including regulating only the flow rate, only the pressure, or both flow rate and pressure. The flow rate may refer to a regulation of the volumetric flow rate and/or a regulation of the mass flow rate.

In addition, the fuel control valve arrangement 30 comprises a second fuel control valve 32. As illustrated in FIG. 1, the second fuel control valve 32 is disposed in an expander by-pass channel 23. The expander by-pass channel 23 extends from an inlet position 50 upstream the first fuel control valve 31 to an outlet position 52 downstream the expander 15. Thus, the fuel storage and supply system 10 comprises the expander by-pass channel 23.

The second fuel control valve 32 is also configured to regulate a flow of the pressurized fuel 32. The second fuel control valve 32 is here configured to regulate a flow of the pressurized fuel 32 in the expander by-pass channel 23.

The second fuel control valve 32 can also be provided in several different manners. In one example, the second fuel control valve 32 is a valve pressure regulator. In another example, the second fuel control valve 32 is flow block valve. In another example, the second fuel control valve 32 is a flow control valve. Accordingly, the second fuel control valve 32 is provided in the form or a pressure regulator valve, a flow block valve or a flow control valve. The choice between the valves may generally depend on the specific requirements of the application and the desired control parameters for the fuel being used.

As mentioned above, the expander by-pass channel 23 extends from the inlet position 50 being located upstream the first fuel control valve 31 to the outlet position 52 being located downstream the expander 15. The expander by-pass channel 23 is a fuel conduit generally provided in the form of a pipe, line or the like.

As depicted in FIG. 1, the inlet position 50 and the outlet position 52 are located on the main fuel conduit 22. Both the main fuel conduit 22 and the expander by-pass channel 23 are parts of the fuel conduit arrangement 20.

More specifically, the outlet position 52 is located on, or at, the expander exhaust fuel conduit 24. Accordingly, the expander by-pass channel intersects with the expander exhaust fuel conduit 24 at the outlet position 52. As depicted in FIG. 1, the expander exhaust fuel conduit 24 is here split into a first expander exhaust sub-conduit 25 and a second expander exhaust sub-conduit 26. The first expander exhaust sub-conduit 25 is arranged upstream the outlet position 52, while the second expander exhaust sub-conduit 26 is arranged downstream the outlet position 52. Other arrangements of the fuel conduit arrangement 20 may also be conceivable depending on type to fuel storage and supply system and type of fuel-consuming power source.

Moreover, as mentioned above, the vehicle 1 comprises the controller 85. As illustrated in FIG. 1, the fuel supply control system 80 here comprises the controller 85. The controller 85 has a processing circuitry 82 configured to control flow of fuel through the expander 15. In particular, the processing circuitry 82 of the controller 85 is configured to control flow of fuel through the expander 15 by controlling any one of the first and second control valves 31, 32 in response to a comparison between a fuel supply characteristics level associated with the number of fuel storage tanks 12, 12a to 12n and a demanded fuel delivery characteristics level associated with the fuel-consuming power source 16.

This means that the fuel storage and supply system 10 can be controlled in a more precise manner depending on available pressure of the fuel in the fuel tanks 12 and the demanded fuel pressure from the fuel-consuming power source 16. More specifically, the supply of fuel 13, such as hydrogen gas, from the fuel tanks 12, 12a to 12n to the fuel-consuming power source 16 is controlled by controlling any one of the first and second fuel control valves 31, 32 in response to the comparison between the fuel supply characteristics level associated with the number of fuel storage tanks 12, 12a to 12n and the demanded fuel delivery characteristics level associated with the fuel-consuming power source 16, 16a, 16b.

By controlling any one of the first and second fuel control valves 31, 32 in response to the comparison, the controller 85 is configured to control the flow of fuel through the expander 15, thus deciding whether or not the expander 15 should be operated so as to extract energy from the compressed fuel, as discussed herein.

Hereby, it also become possible to control the amount of fuel through the expander 15 in response to the comparison between the fuel supply characteristics level associated with the number of fuel storage tanks 12, 12a to 12n and the demanded fuel delivery characteristics level associated with the fuel-consuming power source 16, 16a, 16b.

As such, the fuel storage and supply system 10 allows for regulating supply of fuel from the fuel tanks 12 to the fuel-consuming power source 16 in a precise and efficient manner.

In the context of the present disclosure, the term "fuel supply characteristics level associated with the number of fuel storage tanks" may refer to an average fuel pressure of the fuel storage tanks of the number of fuel storage tanks and/or to an individual fuel pressure of each one of the fuel storage tanks of the number of fuel storage tanks. The fuel supply characteristics level associated with the number of fuel storage tanks is generally a measured level. The fuel supply characteristics level associated with the number of fuel storage tanks can be measured by a pressure sensor arranged in each one of the fuel tanks 12, 12a to 12n. The measured pressure level is transferred to the controller 85 and/or stored in a memory of the controller 85.

Accordingly, in one example, the controller 85 is configured to compare an average fuel pressure of the fuel storage tanks of the number of fuel storage tanks 12, 12a to 12e with a demanded fuel delivery characteristics level associated with the fuel-consuming power source 16.

As mentioned herein, the demanded fuel delivery characteristics level associated with the fuel-consuming power source 16 may be a demanded fuel rail injection pressure of the ICE 16a. Hence, in one example, the controller 85 is configured to compare an average fuel pressure of the fuel storage tanks of the number of fuel storage tanks 12, 12a to 12e with the demanded fuel rail injection pressure of the ICE 16a.

In another example, the controller 85 is configured to compare an individual fuel pressure of each one of the fuel storage tanks of the number of fuel storage tanks 12, 12a to 12e with a demanded fuel delivery characteristics level associated with the fuel-consuming power source 16.

As mentioned herein, the demanded fuel delivery characteristics level associated with the fuel-consuming power source 16 may be the demanded fuel rail injection pressure of the ICE 16a. Hence, in one example, the controller 85 is configured to compare an individual fuel pressure of each one of the fuel storage tanks of the number of fuel storage tanks 12, 12a to 12e with the demanded fuel rail injection pressure of the ICE 16a.

In other examples, the demanded fuel delivery characteristics level associated with the fuel-consuming power source 16 may be a demanded fuel flow rate for the fuel-consuming power source 16, such as a demanded fuel flow rate for the fuel cell system 16b and/or a demanded fuel flow rate for the ICE 16a.

The fuel flow rate may either be a fuel volumetric flow rate or a fuel mass flow rate.

Based on the desired, or needed pressure rate, the controller 85 is configured to control one or more of the fuel control valves 31, 32 based on the above comparison. The fuel control valve 31, 32 are generally configured to adjust their opening or closing based on signals 81 from the controller 85, e.g. control signals from the processing circuitry 82. The control signals are indicated with reference numerals 81 in FIG. 1.

By way of example, the demanded fuel delivery characteristics level associated with a fuel-consuming power source is any one of a demanded fuel injection pressure for the fuel-consuming power source and a demanded fuel flow rate for of the fuel-consuming power source. The demanded fuel injection pressure for the fuel-consuming power source and the demanded fuel flow rate for of the fuel-consuming power source can be determined by the processing circuitry 82. By way of example, the demanded fuel injection pressure for the fuel-consuming power source and the demanded fuel flow rate for of the fuel-consuming power source can be derivable from data sheets, look-up tables or the like. In addition, or alternatively, the demanded fuel injection pressure for the fuel-consuming power source and the demanded fuel flow rate for of the fuel-consuming power source can be determined by the processing circuitry 82 by means of receiving operational data from the engine and/or the fuel cell system. The processing circuitry 82 may also be configured to receive data from one or more pressure sensors and/or flow rate sensors.

By way of example, the ICE 16a would generally have an associated pressure map of injection pressures, which is a function of different operating parameters. In this manner, the controller 85 is configured to determine, based on the pressure map, the desired or needed level of fuel injection pressure.

In regard to the current fuel pressure of each one of the fuel storage tanks of the number of fuel storage tanks 12, 12a to 12e, such measurement and/or data is generally received at the processing circuitry 82 from one or more sensors arranged in the fuel tanks. Such data may likewise be stored in a memory of the controller 85, and updated during operation of the fuel storage and supply system 10.

The controller 85 can be provided in the form of a computer system. One example of a controller in the form of a computer system is further described in relation to FIG: 6.

By having the expander by-pass channel 23, the fuel storage and supply system 10 is configured to allow for supplying fuel 13 to the fuel-consuming power source 16 without passing through the expander 15. Such control of the fuel 13 may be suitable during various operating conditions of the fuel-consuming power source 16. For example, the expander 15 may generally be designed with some limitations in terms of possible expansion ratio, or with a variable expansion ratio with minimum and maximum values. Additionally, the maximum flow rate through the expander 15 might be limited. By way of example, the maximum flow rate through the expander 15 may be lower than a required flow rate at peak load (peak load on the fuel-consuming power source 16). Thus, in some operating conditions and operating situations, it may not be possible, or at least rather challenging, to direct the pressurized fuel 13 through the expander 15. In other situations, it may not be desired to direct the pressurized fuel 13 through the expander 15. Yet, in other situations, it may not be desired to direct all pressurized fuel 13 through the expander 15, but only a part of the pressurized fuel 13 through the expander 15. In these situations, the controller 85 may determine to direct some of the pressurized fuel 13 to the fuel-consuming power source 16 via the expander by-pass channel 23.

Accordingly, by means of the expander by-pass channel 23, it becomes possible to improve the flexibility and control over the operations of the fuel storage and supply system. The expander by-pass channel 23 can further be used to control the flow rate through the expander 15. By adjusting the degree of bypass via the first and second fuel flow control valves 31, 32, the overall flow through the expander 15 can be controlled, providing a possibility of matching the flow rate and pressure requirements of the expander 15 and the fuel storage and supply system to varying demands. The expander 15 may generally be more efficient when operating near its design capacity, so bypassing the expander 15 when full power is not needed can save energy. Bypassing the expander 15 during periods of low demand or when full power is not required can also lead to cost savings by reducing energy consumption and wear on the equipment.

Further, in some operating conditions, the expander operating pressure range might be lower than the maximum pressure of hydrogen gas in the fuel tanks. Thus, while the pressure in the fuel tanks is above the maximum allowed expander inlet pressure, the controller 80 is controlled to direct fuel through the by-pass channel 23, and only start using the expander 15 when the pressure in the fuel tanks falls within a predetermined pressure range. As such, the expander by-pass channel 23 allows for operating the expander 15 in its intended pressure, temperature, and flow rate operating range. When these ranges and/or values are not met, the expander by-pass channel 23 allows for a direct supply of fuel to the fuel-consuming power source 16 regardless of whether the expander is capable of doing so.

The expander by-pass channel 23 also provides for using the fuel storage and supply system in situations where the expander 15 is non-operational e.g. due to damage etc.

Moreover, the use of the expander 15 and the expander by-pass channel 23 may occur simultaneously, and the flow rates into both the expander 15 and the expander by-pass channel 23 may be controlled via, for example, the flow control valves 31, 32. This could be useful when the maximum flow capacity of the expander 15 is lower than the demanded flow rate of fuel from the fuel-consuming power source 16.

For completeness, it should be noted that the fuel storage and supply system 10 comprises at least the number of fuel storage tanks 12, the fuel conduit arrangement 20, the expander 15, the fuel supply control system 80, the fuel control valve arrangement 30, the first fuel control valve 31, the second fuel control valve 32, the expander by-pass channel 23, the controller 85 and the processing circuitry 82. The fuel storage and supply system 10 may also comprise the fuel-consuming power source 16. However, it may often be more common that the fuel storage and supply system 10 is fluidly connected to the fuel-consuming power source 16, such that the fuel storage and supply system 10 and the fuel-consuming power source 16 are separate parts of the vehicle. In some examples, the fuel storage and supply system 10 is fluidly connect to the fuel-consuming power source 16 are integral parts of a powertrain system of the vehicle 1. Hence, the powertrain system comprises the fuel storage and supply system 10 and the fuel-consuming power source 16.

Moreover, in FIG. 1, the fuel supply control system 80 is here configured to control the fuel storage and supply system 10 in any one of a first operational mode, in which delivery of pressurized fuel 13 is performed through the expander 15, a second operational mode, in which delivery of pressurized fuel is performed via the expander by-pass channel 23, and a dual operational mode, in which delivery of pressurized fuel is performed partly through the expander 15 and partly via the expander by-pass channel 23.

As such, the fuel supply control system 80 is configured to control the flow of pressurized fuel 13 through the expander 15, through the by-pass channel 23, or partly through the expander 15 and the by-pass channel 23, in response to the comparison between the fuel supply characteristics level associated with the number of fuel storage tanks and the demanded fuel delivery characteristics level associated with a fuel-consuming power source 16.

The first operational mode is used e.g. when the ratio of fuel tank pressure over fuel injection pressure is high enough to allow effective expander operation. In addition, the first operational mode may also be useful in operating conditions when the expander 15 can meet the ICE demanded flow rate, and when the expansion ratio allows to achieve the demanded fuel injection pressure. In such a case, it may be beneficial to maximize the flow of fuel through the expander 15, thus extracting maximum work.

The second operational mode may generally be activated when the expander operation is either impossible or undesirable, for example, when the pressure drop is too large for the subsequent fuel injection, the flow losses are too large for the required fuel flow rate, or the noise requirements are too restrictive.

The comparison may provide several different control options for the fuel supply control system 80. By way of example, when the fuel tank pressure is above a maximum rated expander pressure, the fuel supply control system 80 determines to bypass the expander 15 or throttle the pressure down using the pressure regulator (valve 31) upstream of the expander 15. When the tank pressure over fuel demand pressure ratio is lower than or too close to a expander minimum expansion ratio, the fuel supply control system 80 determines to bypass the expander 15. When that same ratio is above the expander maximum expansion ratio, the fuel supply control system 80 determines to throttle the pressure down either upstream or downstream of the expander 15, using the valves 31 and 33. When the tank pressure and hence gas density are above a certain value, the expander flow rate capacity might not be high enough, in which case the fuel supply control system 80 again determines to bypass part of the fuel through the expander by-pass channel 23. When the tank pressure is lower than the demanded pressure, the fuel supply control system 80 determines either stop the fuel-consuming power source 16, or switch the fuel-consuming power source 16 into a derate mode (i.e. a mode using lower injection pressure and lower performance). Conversely, when the tank pressure and the tank / demand pressure ratio is within an operating range of the expander 15, the fuel supply control system 80 determines to pass all or part of the fuel through the expander 15, typically depending on its flow rate capacity.

As depicted in FIG. 1, the fuel supply control system 80 here further comprises a third fuel control valve 30, 33. The third fuel control valve 33 is disposed in the fuel conduit arrangement 20. The third fuel control valve 33 is disposed downstream the outlet position 52. As such, the third fuel control valve 33 is arranged / disposed downstream the expander 15. Also, in this manner, the third fuel control valve 33 is arranged / disposed downstream the expander by-pass channel 23.

The third fuel control valve 33 is also configured to regulate a flow of the pressurized fuel 13. More specifically, the fuel control valve arrangement 30 comprises third fuel control valve 33. In other words, the third fuel control valve 33 is an integral part of the fuel control valve arrangement 30.

The third fuel control valve 33 can also be provided in several different manners. In one example, the third fuel control valve 33 is a valve pressure regulator. In another example, the third fuel control valve 33 is flow block valve. In another example, the third fuel control valve 33 is a flow control valve. Accordingly, the third fuel control valve 33 is provided in the form or a pressure regulator valve, a flow block valve or a flow control valve. The choice between the valves may generally depend on the specific requirements of the application and the desired control parameters for the fuel being used.

The arrangement of the third fuel control valve 33 in the fuel conduit arrangement 20 allows for an even more precise regulation of the expander outlet pressure.

In FIG. 1, when the fuel supply control system 80 comprises the three fuel control valves 31, 32, 33, the fuel supply control system 80 is configured to control the fuel storage and supply system 10 in the first operational mode by controlling the first fuel control valve 31 to an open state, the second fuel control valve 32 to a closed state, while the third fuel control valve 33 is controllable to regulate the flow of the pressurized fuel. In this manner, pressurized fuel 13 is allowed to flow through the expander 15 to the fuel-consuming power source 16 in response to the comparison between the fuel supply characteristics level associated with the number of fuel storage tanks and the demanded fuel delivery characteristics level associated with a fuel-consuming power source 16.

In FIG. 1, when the fuel supply control system 80 comprises the three fuel control valves 31, 32, 33, the fuel supply control system 80 is configured to control the fuel storage and supply system 10 in the second operational mode by controlling the first fuel control valve 31 to a closed state, the second fuel control valve 32 to an open state, while the third fuel control valve 33 is controllable to regulate the flow of the pressurized fuel.

In this manner, pressurized fuel 13 is allowed to flow through the by-pass channel 23 to the fuel-consuming power source 16 in response to the comparison between the fuel supply characteristics level associated with the number of fuel storage tanks and the demanded fuel delivery characteristics level associated with a fuel-consuming power source 16.

It should be noted that each one of the conduits 21, 22, 23, 24, 25, 26 making up the fuel conduit arrangement 20 can be provided in the form of a pipe, a line, a hose or the like, which are standard components of a fuel supply system of a vehicle.

Moreover, as mentioned herein, the fuel-consuming power source 16 is any one an internal combustion engine 16a and a fuel cell system 16b.

Moreover, as mentioned herein, the expander 15 can be configured to be connected to any one of a crankshaft 17 of the ICE 16a, so as to provide additional power to the vehicle and/or to the powertrain system, the fuel cell system and a generator for charging the battery system.

FIG. 2 schematically illustrates another example of fuel storage and supply system 10. The fuel storage and supply system 10 of FIG. 2 comprises the same components and features as the fuel storage and supply system 10 of FIG. 1 except that the fuel storage and supply system 10 of FIG. 2 is designed without the third fuel control valve 33.

Hence, in FIG. 2, the fuel supply control system 80 is configured to control the fuel storage and supply system 10 in any one of the first operational mode, in which delivery of pressurized fuel is performed through the expander 15, the second operational mode, in which delivery of pressurized fuel is performed via the expander by-pass channel 23, and the dual operational mode, in which delivery of pressurized fuel is performed partly through the expander 15 and partly via the expander by-pass channel 23. As such, the fuel supply control system 80 is configured to control the flow of pressurized fuel 13 through the expander 15, through the by-pass channel 23, or partly through the expander 15 and the by-pass channel 23, in response to the comparison between the fuel supply characteristics level associated with the number of fuel storage tanks and the demanded fuel delivery characteristics level associated with a fuel-consuming power source 16.

In FIG. 2, the fuel supply control system 80 is configured to control the fuel storage and supply system 10 in the first operational mode by controlling the first fuel control valve 31 to an open state and the second fuel control valve 32 to a closed state. In this manner, pressurized fuel 13 is allowed to flow through the expander 15 to the fuel-consuming power source 16 in response to the comparison between the fuel supply characteristics level associated with the number of fuel storage tanks and the demanded fuel delivery characteristics level associated with a fuel-consuming power source 16.

Moreover, in FIG. 2, the fuel supply control system 80 is configured to control the fuel storage and supply system 10 in the second operational mode by controlling the first fuel control valve 31 to a closed state and the second fuel control valve 32 to an open state. In this manner, pressurized fuel 13 is allowed to flow through the by-pass channel 23 to the fuel-consuming power source 16 in response to the comparison between the fuel supply characteristics level associated with the number of fuel storage tanks and the demanded fuel delivery characteristics level associated with a fuel-consuming power source 16.

FIG. 3 schematically illustrates another example of a fuel storage and supply system 10. The fuel storage and supply system 10 of FIG. 3 comprises the same components as the fuel storage and supply system 10 of FIG. 1. In addition, as depicted in FIG. 3, the fuel storage and supply system 10 here further comprises a heat exchanger 19. The heat exchanger 19 is arranged in-between the expander 15 and the third fuel control valve 33. The heat exchanger 19 is arranged and configured to control the fuel temperature of the fuel 13 in the fuel conduit arrangement 20. The heat exchanger 19 might be arranged and configured to control the fuel temperature not only downstream of the expander 15, but also upstream the expander 15. Hence, the heat exchanger 19 might be placed either between the expander 15 and the third valve 33, or downstream of the expander 15 and the third valve 33, or upstream of the expander 15 and the third valve 33. The fuel storage and supply system 10 may comprise a set of heat exchangers, e.g. a first heat exchanger arranged downstream of the expander 15, a second heat exchanger arranged upstream of the expander, in order to heat the pressurized gaseous fuel prior to reaching the expander 15.

FIG. 4 schematically illustrates another example of fuel storage and supply system 10. The fuel storage and supply system 10 of FIG. 4 comprises the same components and features as the fuel storage and supply system 10 of FIG. 2. As such, the fuel storage and supply system 10 of FIG. 4 comprises the same components and features as the fuel storage and supply system 10 of FIG. 1 except that the fuel storage and supply system 10 of FIG. 4 is designed without the third fuel control valve 33.

In addition, the fuel storage and supply system 10 of FIG. 4 comprises an additional fuel control valve in the form of a fourth fuel control valve 34. The fourth fuel control valve 34 can be of the same type of valve as the fuel control valves 31, 32, 33. By way of example, the fourth fuel control valve 34 is a pressure regulator valve.

The fourth fuel control valve 34 is disposed upstream of the expander 15. In addition, the fourth fuel control valve 34 is disposed upstream of the inlet position 50. The fourth fuel control valve 34 is also disposed in the main fuel conduit 22. Further, the fourth fuel control valve 34 is disposed upstream of the expander by-pass channel 23. It should also be noted that the example of FIG. 4 can include the third fuel control valve 33.

The fourth fuel control valve 34 is arranged and configured to reduce the fuel pressure to a pressure level that is within the expander operating range. By the arrangement of the fourth fuel control valve 34, it becomes possible to control the expander 15 during an ICE 16a start-up so as to provide extra power to the auxiliaries, ICE heating, cab heating, EATS heating, etc., by reducing fuel pressure to a pressure level that is within the expander operating range.

Hence, in FIG. 4, the fuel supply control system 80 is also configured to control the fuel storage and supply system 10 in any one of the first operational mode, in which delivery of pressurized fuel is performed through the expander 15, the second operational mode, in which delivery of pressurized fuel is performed via the expander by-pass channel 23, and the dual operational mode, in which delivery of pressurized fuel is performed partly through the expander 15 and partly via the expander by-pass channel 23. As such, the fuel supply control system 80 is configured to control the flow of pressurized fuel 13 through the expander 15, through the by-pass channel 23, or partly through the expander 15 and the by-pass channel 23, in response to the comparison between the fuel supply characteristics level associated with the number of fuel storage tanks and the demanded fuel delivery characteristics level associated with a fuel-consuming power source 16. In FIG. 4, the fuel supply control system 80 is also configured to control the fuel storage and supply system 10 by controlling the fourth fuel control valve 34 to an open state or a closed state. In this manner, pressurized fuel 13 is allowed to flow through the expander 15 to the fuel-consuming power source 16 in response to the comparison between the fuel supply characteristics level associated with the number of fuel storage tanks and the demanded fuel delivery characteristics level associated with a fuel-consuming power source 16, and by further controlling the fourth fuel control valve 34.

FIG. 5 illustrates another example of a fuel storage and supply system 10. The fuel storage and supply system 10 of FIG. 5 comprises the same components as the fuel storage and supply system 10 of FIG. 1. In addition to the components of the fuel storage and supply system 10 in FIG 1, the number of fuel tanks 12 in FIG. 5 are here grouped into a first sub-group of fuel tanks 12a to 12c and a second sub-group of fuel tanks 12d to 12e, wherein the first sub-group of fuel tanks is configured to be used in response to a higher demanded fuel injection pressure, while the second sub-group of fuel tanks is configured to be used in response to a lower demanded fuel injection pressure. In this type of fuel storage and supply system 10, the expander 15 is disposed downstream the first sub-group of fuel tanks 12a to 12c and the second sub-group of fuel tanks 12d to 12e.

The first sub-group of fuel tanks 12a to 12c are fluidly connected to the main fuel conduit 22 by a common fuel conduit. In a similar vein, the second sub-group of fuel tanks 12e to 12f are fluidly connected to the main fuel conduit 22 by another common fuel conduit. These common fuel conduits may join the main fuel conduit 22 at a common junction point, such as 22a, or as in FIG. 5, at different positions of the fuel conduit arrangement 20.

Although not illustrated, the example of FIG. 5 typically comprises an additional set of fuel control valves, e.g. in the form of a fifth fuel control valve and a sixth fuel control valve. The fifth fuel control valve is disposed in-between the first sub-group of fuel tanks 12a to 12c and the inlet position 50. The fifth fuel control valve is disposed in the common fluid conduit. Analogously, the sixth fuel control valve is disposed in-between the second sub-group of fuel tanks 12d to 12e and the inlet position 50. The sixth fuel control valve is disposed in the another common fluid conduit. The fifth and sixth fuel control valves can be of the same type of valve as the fuel control valves 31, 32, 33. By way of example, the fifth and sixth fuel control valves are pressure regulator valves. These valves are used to control the fuel flow from the two groups of fuel tanks depending on the measured pressure in each group of fuel tanks and e.g. demanded injection pressure.

In another example (although not illustrated), the expander 15 is disposed in-between the first sub-group of tanks and the second sub-group of tanks. This arrangement of fuel tanks may be particularly useful in a vehicle having a high-pressure injection system.

It should be noted that the above presentation of the fuel storage and supply system 10 should also be regarded as disclosing a method for controlling the fuel storage and supply system 10, for instance using the controller 85 and the processing circuitry 82. The method comprises at least a step / operation / action of controlling flow of fuel through the expander 15 by controlling any one of the first and second fuel control valves 31, 32 in response to a comparison between the fuel supply characteristics level associated with the number of fuel storage tanks 12 and the demanded fuel delivery characteristics level associated with a fuel-consuming power source 16.

The method may also comprises controlling the third fuel control valve 33, as described herein.

Further details of one example of a computer system that can be used as the controller 85 will now be described in relation to FIG. 6.

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1. A fuel storage and supply system 12 for a vehicle 1, the fuel storage and supply system comprising: a number of fuel storage tanks 12 for storing a pressurized fuel 13; a fuel conduit arrangement 20 configured to be in fluid communication with the number of tanks; an expander 15 disposed in the fuel conduit arrangement and further arranged downstream the number of tanks, the expander being configured to convert at least a portion of the energy from the pressurized fuel into mechanical work; a fuel supply control system 80, the fuel supply control system comprising a fuel control valve arrangement 30 disposed in the fuel conduit arrangement, the fuel control valve arrangement having a first fuel control valve 31 disposed in the fuel conduit arrangement and in-between the number of tanks and the expander, the first fuel control valve being configured to regulate a flow of the pressurized fuel, a second fuel control valve 32 disposed in an expander by-pass channel 23, the expander by-pass channel extending from an inlet position 50 upstream the first fuel control valve to an outlet position 52 downstream the expander, the second fuel control valve being configured to regulate a flow of the pressurized fuel; wherein the fuel supply control system 80 further comprises a controller 85 having processing circuitry 82 configured to control flow of fuel through the expander by controlling any one of the first and second fuel control valves in response to a comparison between a fuel supply characteristics level associated with the number of fuel storage tanks and a demanded fuel delivery characteristics level associated with a fuel-consuming power source 16.

Example 2. The fuel storage and supply system according to example 1, wherein the fuel supply control system is configured to control the fuel storage and supply system in any one of a first operational mode, in which delivery of pressurized fuel is performed through the expander, a second operational mode, in which delivery of pressurized fuel is performed via the expander by-pass channel, and dual operational mode, in which delivery of pressurized fuel is performed partly through the expander and partly via the expander by-pass channel.

Example 3. The fuel storage and supply system according to example 1 or example 2, wherein fuel supply control system further comprises a third fuel control valve 30, 33 disposed in the fuel conduit arrangement, the third fuel control valve is 33 disposed downstream the outlet position. The third fuel control valve 33 is configured to regulate a flow of the pressurized fuel.

Example 4. The fuel storage and supply system according to example 3, when dependent on example 2, wherein the fuel supply control system is configured to control the fuel storage and supply system in the first operational mode by controlling the first fuel control valve to an open state, the second fuel control valve to a closed state, while the third fuel control valve is controllable to regulate the flow of the pressurized fuel.

Example 5. The fuel storage and supply system according to example 3 or example 4, when dependent on example 2, wherein the fuel supply control system is configured to control the fuel storage and supply system in the second operational mode by controlling the first fuel control valve to a closed state, the second fuel control valve to an open state, while the third fuel control valve is controllable to regulate the flow of the pressurized fuel.

Example 6. The fuel storage and supply system according to any of examples 1 to 5, wherein the fuel is any one of hydrogen gas, methane or natural gas.

Example 7. The fuel storage and supply system according to any of examples 1 to 6, wherein the fuel-consuming power source is any one an internal combustion engine and a fuel cell system.

Example 8. The fuel storage and supply system according to any of examples 1 to 7, wherein the expander is configured to be connected to any one of a crankshaft 17 of an internal combustion engine, so as to provide additional power, a fuel cell system and a generator for charging a battery system.

Example 9. The fuel storage and supply system according to any of example 1 to 8, further comprising a heat exchanger 19 arranged in-between the expander and the third fuel control valve.

Example 10. The fuel storage and supply system according to any of examples 1 to 9, wherein the number of fuel tanks are grouped into a first sub-group of fuel tanks and a second sub-group of fuel tanks, wherein the first sub-group of fuel tanks is configured to be used in response to a higher demanded fuel injection pressure, while the second sub-group of fuel tanks is configured to be used in response to a lower demanded fuel injection pressure.

Example 11. The fuel storage and supply system according to example 10, wherein the expander is disposed downstream the first sub-group of fuel tanks and the second sub-group of fuel tanks.

Example 12. The fuel storage and supply system according to any of examples 1 - 11, wherein the fuel storage and supply system comprises a fourth flow control valve 34 disposed upstream the inlet position.

Example 13. The fuel storage and supply system according to any of examples 1 to 12, wherein the demanded fuel delivery characteristics level associated with a fuel-consuming power source is any one of a demanded fuel injection pressure level for the fuel-consuming power source and a demanded fuel flow rate level for the fuel-consuming power source.

Example 14. A vehicle comprising a fuel storage and supply system according to example 1 to example 13.

Example 15. A method for controlling a fuel storage and supply system, comprising a number of fuel storage tanks 12 for storing a pressurized fuel 13; a fuel conduit arrangement 20 configured to be in fluid communication with the number of tanks; an expander 15 disposed in the fuel conduit arrangement and further arranged downstream the number of tanks, the expander being configured to convert at least a portion of the energy from the pressurized fuel into mechanical work; a fuel supply control system 80, the fuel supply control system comprising a fuel control valve arrangement 30 disposed in the fuel conduit arrangement, the fuel control valve arrangement having a first fuel control valve 31 disposed in the fuel conduit arrangement and in-between the number of tanks and the expander, the first fuel control valve being configured to regulate a flow of the pressurized fuel, a second fuel control valve 32 disposed in an expander by-pass channel 23, the expander by-pass channel extending from an inlet position 50 upstream the first fuel control valve to an outlet position 52 downstream the expander, the second fuel control valve being configured to regulate a flow of the pressurized fuel; said method comprising controlling flow of fuel through the expander by controlling any one of the first and second fuel control valves in response to a comparison between a fuel supply characteristics level associated with the number of fuel storage tanks and a demanded fuel delivery characteristics level associated with a fuel-consuming power source 16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel storage and supply system (10) for a vehicle (1), the fuel storage and supply system comprising:
- a number of fuel storage tanks (12, 12a to 12n) for storing pressurized fuel (13);
- a fuel conduit arrangement (20) configured to be in fluid communication with the number of fuel storage tanks;
- an expander (15) disposed in the fuel conduit arrangement and further arranged downstream the number of fuel storage tanks, the expander being configured to convert at least a portion of the energy from the pressurized fuel into mechanical work;
- a fuel supply control system (80), the fuel supply control system comprising a fuel control valve arrangement (30) disposed in the fuel conduit arrangement, the fuel control valve arrangement having a first fuel control valve (31) disposed in the fuel conduit arrangement, and in-between the number of fuel storage tanks and the expander, the first fuel control valve being configured to regulate a flow of the pressurized fuel, and a second fuel control valve (32) disposed in an expander by-pass channel (23), the expander by-pass channel extending from an inlet position (50) upstream the first fuel control valve to an outlet position (52) downstream the expander, the second fuel control valve being configured to regulate a flow of the pressurized fuel;
- wherein the fuel supply control system (80) further comprises a controller (85) having processing circuitry (82) configured to control flow of fuel through the expander by controlling any one of the first and second fuel control valves in response to a comparison between a fuel supply characteristics level associated with the number of fuel storage tanks and a demanded fuel delivery characteristics level associated with a fuel-consuming power source (16).

2. The fuel storage and supply system according to claim 1, wherein the fuel supply control system is configured to control the fuel storage and supply system in any one of a first operational mode, in which delivery of pressurized fuel is performed through the expander, a second operational mode, in which delivery of pressurized fuel is performed via the expander by-pass channel, and dual operational mode, in which delivery of pressurized fuel is performed partly through the expander and partly via the expander by-pass channel.

3. The fuel storage and supply system according to claim 1 or claim 2, wherein fuel supply control system further comprises a third fuel control valve (30, 33) disposed in the fuel conduit arrangement, the third fuel control valve being disposed downstream the outlet position, the third fuel control valve being configured to regulate a flow of the pressurized fuel.

4. The fuel storage and supply system according to claim 3, when dependent on claim 2, wherein the fuel supply control system is configured to control the fuel storage and supply system in the first operational mode by controlling the first fuel control valve to an open state, the second fuel control valve to a closed state, while the third fuel control valve is controllable to regulate the flow of the pressurized fuel.

5. The fuel storage and supply system according to claim 3 or claim 4, when dependent on claim 2, wherein the fuel supply control system is configured to control the fuel storage and supply system in the second operational mode by controlling the first fuel control valve to a closed state, the second fuel control valve to an open state, while the third fuel control valve is controllable to regulate the flow of the pressurized fuel.

6. The fuel storage and supply system according to any of claims 1 to 5, wherein the fuel is any one of hydrogen gas, methane, and natural gas.

7. The fuel storage and supply system according to any of claims 1 to 6, wherein the fuel-consuming power source is any one an internal combustion engine and a fuel cell system.

8. The fuel storage and supply system according to any of claims 1 to 7, wherein the expander is configured to be connected to any one of a crankshaft (17) of an internal combustion engine, so as to provide additional power, and/or a generator for charging a battery system.

9. The fuel storage and supply system according to any of claims 1 to 8, further comprising a heat exchanger (19) arranged in-between the expander and the third fuel control valve.

10. The fuel storage and supply system according to any of claims 1 to 9, wherein the number of fuel tanks are grouped into a first sub-group of fuel tanks and a second sub-group of fuel tanks, wherein the first sub-group of fuel tanks is configured to be used in response to a higher demanded fuel injection pressure, while the second sub-group of fuel tanks is configured to be used in response to a lower demanded fuel injection pressure.

11. The fuel storage and supply system according to claim 10, wherein the expander is disposed downstream the first sub-group of fuel tanks and the second sub-group of fuel tanks.

12. The fuel storage and supply system according to any of claims 1 - 11, where the fuel storage and supply system comprises a fourth flow control valve (34) disposed upstream the inlet position.

13. The fuel storage and supply system according to any of claims 1 to 12, wherein the demanded fuel delivery characteristics level associated with a fuel-consuming power source is any one of a demanded fuel injection pressure level for the fuel-consuming power source and a demanded fuel flow rate level for the fuel-consuming power source.

14. A vehicle comprising a fuel storage and supply system according to claim 1 to claim 13.

15. A method for controlling a fuel storage and supply system (10), comprising a number of fuel storage tanks (12) for storing a pressurized fuel (13); a fuel conduit arrangement (20) configured to be in fluid communication with the number of tanks; an expander (15) disposed in the fuel conduit arrangement and further arranged downstream the number of tanks, the expander being configured to convert at least a portion of the energy from the pressurized fuel into mechanical work; a fuel supply control system (80), the fuel supply control system comprising a fuel control valve arrangement (30) disposed in the fuel conduit arrangement, the fuel control valve arrangement having a first fuel control valve (31) disposed in the fuel conduit arrangement and in-between the number of tanks and the expander, the first fuel control valve being configured to regulate a flow of the pressurized fuel, and a second fuel control valve (32) disposed in an expander by-pass channel (23), the expander by-pass channel extending from an inlet position (50) upstream the first fuel control valve to an outlet position (52) downstream the expander, the second fuel control valve being configured to regulate a flow of the pressurized fuel; said method comprising controlling flow of fuel through the expander by controlling any one of the first and second fuel control valves in response to a comparison between a fuel supply characteristics level associated with the number of fuel storage tanks and a demanded fuel delivery characteristics level associated with a fuel-consuming power source (16).
